# EUROPÄISCHE PATENTSCHRIFT

(11) **EP 1 451 251 B1**
(45) Veröffentlichungstag und Bekanntmachung des Hinweises auf die Patenterteilung: **05.08.2009**
(21) Anmeldenummer: 02803779.4
(22) Anmeldetag: 19.11.2002
(51) Int. Cl.: C08L 53/02, C08F 297/04

(54) **TRANSPARENTE STYROL-BUTADIEN-BLOCKCOPOLYMERMISCHUNGEN**
TRANSPARENT STYROL-BUTADIENE BLOCK COPOLYMER MIXTURES
MELANGES TRANSPARENTS DE COPOLYMERES SEQUENCES STYROL-BUTADIENE

(30) Priorität: 28.11.2001 DE 10158500
(43) Veröffentlichungstag der Anmeldung: 01.09.2004
(73) Patentinhaber: BASF SE, 67056 Ludwigshafen (DE)
(72) Erfinder: KNOLL, Konrad, 67069 Ludwigshafen (DE); DESBOIS, Philippe, 67487 Maikammer (DE); WALTER, Hans-Michael, 67251 Freinsheim (DE); OSSWALD, Friederike, 68163 Mannheim (DE); ISHAQUE, Michael, 68165 Mannheim (DE); GERLACH, Till, 67071 Ludwigshafen (DE)
(86) Internationale Anmeldenummer: PCT/EP2002/012933
(87) Internationale Veröffentlichungsnummer: WO 2003/046075

(56) Entgegenhaltungen:
- EP-A- 0 026 916
- EP-A- 0 492 490
- WO-A-01/44315
- WO-A-02/094899
- US-A- 5 036 130

## Beschreibung

Die Erfindung betrifft Mischungen enthaltend lineare Blockcopolymere aus vinylaromatischen Monomeren und Dienen der Struktur (I) S₁-B₁-S₂ und (II) S₃-B₂-S₄, wobei S₁ für einen Block aus vinylaromatischen Monomere mit einer zahlenmittleren Molmasse Mₙ im Bereich von 40.000 bis 70.000 g/mol, S₂, S₃ und S₄ jeweils für Blöcke aus vinylaromatischen Monomeren mit einer zahlenmittleren Molmasse Mₙ im Bereich von 5.000 bis 20.000 g/mol, B₁ und B₂ jeweils für Blöcke aus Dienen oder Copolymerblöcke aus Dienen und vinylaromatischen Monomeren mit einer zahlenmittleren Molmasse Mn im Bereich von 15.000 bis 40.000 g/mol steht, und das Verhältnis der Blockcopolymeren (I)/(II) im Bereich von 0,6 bis 2 liegt. Desweiteren betrifft die Erfindung Verfahren zur Herstellung der Mischungen und deren teilweise oder vollständige Hydrierung.

Styrol-Butadien-Blockcopolymere und Mischungen mit Polystyrol sind mit vielfältigen Strukturen bekannt. Die Blockcopolymere können linear oder sternförmig verzweigt sein und Blöcke gleicher oder unterschiedlicher Molmassen aufweisen, so dass symmetrische und unsymmetrische Strukturen resultieren. Die Butadien-haltigen Blöcke können auch Styrol enthalten. Zwischen den einzelne Blökken können scharfe oder verschmierte Übergänge auftreten. Eine Übersicht über Styrol-Butadien-Blockcopolymer findet sich z. B. in Kunststoff Handbuch, Bd. 4 Polystyrol, Carl Hanser-Verlag München-Wien 1996, Kapitel 3.3.4, Seiten 161 - 164.

Mischungen von linearen Dreiblockcopolymeren S-B-S mit unterschiedlicher Zusammensetzung und Molmassen sind aus DE-A 29 40 861 bekannt. Die Mischung wird durch sequentielle anionische Polymerisation mit zweifacher, gemeinsamer Initator- und Styroldosierung erhalten. Das Verhältnis der Initiatormenge in der ersten Stufe zur der in der zweiten Stufe liegt im Bereich von 1:2 bis 1:7, das bedeutet, das Blockcopolymere mit dem kürzeren Styrolblock überwiegt deutlich. Während der Übergang zwischen dem ersten Styrolblock und dem Butadien-haltigen Block scharf ist, geht der Butadien-haltige Block graduell in den zweiten Styrolblock über.

Die US 5,227,419 beschreibt Mischungen von Blockcopolymeren, deren Butadien-haltige Blöcke einen Styrolgradienten aufweisen. In der Mischung liegt das Blockcopolymere mit dem höheren Styrolblockanteil ebenfalls in untergeordneter Menge vor.

Die beschriebenen Blockcopolymeren führen jedoch in Mischungen mit Polystyrol bei vergleichbarer Zähigkeit zu einer drastischen Verringerung des Steifigkeit gegenüber dem von Polystyrol. Auch die Wärmeformbeständigkeit wird deutlich erniedrigt.

Styrol-Butadien- und Styrol-Isopren-Blockcopolymere können zu Polymeren mit unterschiedlichen Eigenschaften hydriert werden, beispielsweise mit verbesserter Alterungs- oder Witterungsbeständigkeit. Je nach Hydrierbedingungen können hierbei selektiv (US 4,882,384) die olefinischen Doppelbindungen oder sowohl die olefinischen als auch die aromatischen Doppelbindungen hydriert werden (US 3,333,024, US 3,431,323, US 3,598,886).

Die WO 94/21694 beschreibt beispielsweise die Hydrierung von Polystyrol oder Styrol-Butadien- oder Styrol-Isopren-Blockcopolymeren an geträgerten Metallkatalysatoren. Unter den Reaktionsbedingungen werden neben dem Dienblock auch die Phenylgruppen des Polystyrolblocks hydriert. Aus dem Polystyrolblock entsteht auf diese Weise ein Polycyclohexylethylenblock (PCHE).

Einen verbesserten Hydrierkatalysator zur Kernhydrierung von Styrolpolymerisaten beschreibt die WO 96/34896. Als Ausgangsmaterial für die Kernhydrierung werden dort neben Polystyrol auch Styrol-Butadien- bzw. Styrol-Isopren- Zwei-und Dreiblockpolymere beschrieben. Weiterhin ist die Hydrierung von Styrol-Butadien- bzw. Styrol-Isopren-Blockcopolymeren mit 3 bzw. 5 Blöcken (WO 00/32646, WO 00/56783, WO 01/1268-1) sowie die Hydrierung von sternförmigen Styrol-Butadien-Blockcopolymeren (WO 01/23437) beschrieben.

Aus der EP-A 505 110 sind hydrierte Mischungen aus Styrol-Butadien-Blockcopolymeren und Polystyrol für optische Speichermedien bekannt.

Aufgabe der Erfindung bestand darin, transparente Mischungen von Styrol-Butadien-Blockcopolymeren mit Polystyrol bereitzustellen, die die vorgenannten Nachteile nicht aufweisen und insbesondere bei vergleichbarer Zähigkeit eine höhere Steifigkeit und eine höhere Wärmeformbeständigkeit aufweisen.

Eine weitere Aufgabe der vorliegenden Erfindung war die Bereitstellung von kernhydrierten Blockcopolymeren, die vor allem in Abmischung mit kernhydriertem Polystyrol neben einem sehr guten Zähigkeits-Steifigkeitsverhältnis und einer exzellenter Transparenz auch eine hohe Wärmeformbeständigkeit aufweisen. Ferner sollten sie eine gute Verträglichkeit mit hydriertem Polystyrol aufweisen, um homogene Mischungen mit exzellenter Transparenz zu ermöglichen.

Demgemäss wurden die oben genannten Mischungen gefunden.

Das Verhältnis der Blockcopolymeren (I)/(II) liegt im Bereich von 0,6 bis 2, bevorzugt im Bereich von 0,7 bis 1,5, besonders bevorzugt im Bereich von 0,9 bis 1,3.

Als vinylaromatische Monomere können beispielsweise Styrol, alpha-Methylstyrol, kernalkylierte Styrole wie p-Methylstyrol oder Tertiärbutylstyrol, oder 1,1-Diphenylethylen oder Mischungen davon eingesetzt werden.

Bevorzugte Diene sind Butadien, Isopren, 2,3-Dimethylbutadien, 1,3-Pentadien, 1,3-Hexadien oder Piperylen oder deren Mischungen; besonders bevorzugt sind Butadien und Isopren.

Besonders bevorzugte Blockcopolymere werden aus den Monomeren Styrol und Butadien gebildet.

Die Blöcke B₁ und B₂ können ausschließlich aus Dienen oder aus Dienen und vinylaromatischen Monomeren aufgebaut sein. Das Verhältnis vinylaromatisches Monomer/Dien liegt für die Blöcke B₁ und B₂ in der Regel im Bereich von 0 bis 1, wobei in den Blöcken B₁ und B₂ das gleiche oder verschiedene Verhältnisse vinylaromatisches Monomer/Dien vorliegen können. Bevorzugt sind die Blöcke B₁ und B₂ Homopolydienblöcke, insbesondere Homopolybutadienblöcke oder Copolymerblöcke mit einem Verhältnis vinylaromatisches Monomer/Dien im Bereich von 0,3 bis 0,7. Besonders bevorzugt weisen die Copolymerblöcke eine statistische Verteilung der Dien- und vinylaromatischen Monomeren auf.

Die Übergänge zwischen den einzelnen Blöcken sind scharf, das heißt die Zusammensetzung ändert sich sprunghaft.

Die zahlenmittleren Molmassen Mₙ von S₁ liegen im Bereich von 40.000 bis 70.000 g/mol, bevorzugt im Bereich von 45.000 bis 70.000, besonders bevorzugt im Bereich von 50.000 bis 60.000. Die zahlenmittleren Molmassen Mₙ von S₂, S₃, und S₄ liegen jeweils und unabhängig voneinander im Bereich von 5.000 bis 20.000 g/mol, bevorzugt im Bereich von 8.000 bis 17.000 g/mol, besonders bevorzugt im Bereich von 11.000 bis 14.000 g/mol. Die Blöcke B₁ und B₂ aus Dienen oder Copolymerblöcke aus Dienen und vinylaromatischen Monomeren weisen jeweils unabhängig voneinander eine zahlenmittleren Molmasse Mₙ im Bereich von 15.000 bis 40.000 g/mol, bevorzugt im Bereich von 18.000 bis 30.000 g/mol, besonders bevorzugt im Bereich von 20.000 bis 25.000 g/mol auf.

Bevorzugt sind die Blockcopolymeren (II) symmetrisch aufgebaut, das heißt die Blöcke S₃ und S₄ weisen die gleichen zahlenmittleren Molmassen Mₙ auf. Die Blockcopolymeren (I) sind dagegen deutlich unsymmetrisch mit einem Verhältnis der zahlenmittleren Molmassen von S₁ zu S₂ von mindestens 2, bevorzugt im Bereich von 5-8.

Die erfindungsgemäßen Mischungen können hergestellt werden, indem die Blockcopolymeren (I) und (II) jeweils durch sequentielle anionische Polymerisation von vinylaromatischen Monomeren und Dienen mit alkalimetallorganischen Initiatoren nacheinander oder in verschiedenen Reaktoren hergestellt und anschließend im Verhältnis (I)/(II) im Bereich von 0,6 bis 2 abgemischt werden.

Als anionischer Polymerisationsinitiator können die üblichen mono-, bi- oder multifunktionellen Alkalimetallalkyle, -aryle oder -aralkyle verwendet werden. Zweckmäßigerweise werden lithiumorganische Verbindungen eingesetzt wie Ethyl-, Propyl-, Isopropyl-, n-Butyl-, sek.-Butyl-, tert.-Butyl-, Phenyl-, Diphenylhexyl-, Hexamethyldi-, Butadienyl-, Isoprenyl-, Polystyryllithium, 1,4-Dilithiobutan, 1,4-Dilithio-2-buten oder 1,4-Dilithiobenzol. Die benötigte Menge an Polymerisations-initiator richtet sich nach dem gewünschten Molekulargewicht. In der Regel liegt sie im Bereich von 0,001 bis 5 mol-%, bezogen auf die Gesamtmonomermenge.

Die Polymerisation kann in Gegenwart eines Lösungsmittels vorgenommen werden. Als Lösungsmittel eignen sich die für anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, IsoOctan, Benzol, Alkylbenzole, wie Toluol, Xylol, Ethylbenzol oder Decalin oder geeignete Gemische. Bevorzugt werden Cyclohexan und Methylcyclohexan verwendet.

In Gegenwart von retardierend auf die Polymerisationsgeschwindigkeit wirkenden Metallorganylen, wie Magnesium-, Aluminium- oder Zinkalkylen, kann die Polymerisation auch lösungsmittelfrei durchgeführt werden.

Nach Beendigung der Polymerisation können die lebenden Polymerketten mit einem Kettenabbruchmittel verschlossen werden. Als Kettenabbruchmittel eignen sich protonaktive Substanzen oder Lewis-Säuren, wie beispielsweise Wasser, Alkohole, aliphatische oder aromatische Carbonsäuren sowie anorganische Säuren wie Kohlensäure oder Borsäure.

Die Abmischung der Blockcopolymeren kann zu beliebiger Zeit nach Beendigung der Polymerisation, also beispielsweise vor oder nach der Terminierung, Entgasung oder sonstigen Aufarbeitungsschritten erfolgen. Die zeitlich oder räumlich getrennte Herstellung der Blockcopolymeren (I) und (II) hat den Vorteil, dass die zahlenmittleren Molmassen Mₙ der einzelnen Blöcke S und B frei gewählt werden können.

Nach einem alternativen Verfahren können die Blockcopolymeren (I) und (II) durch sequentielle anionische Polymerisation von vinylaromatischen Monomeren und Dienen mit alkalimetallorganischen Initiatoren gleichzeitig in einem Reaktoren durch zweifache, gemeinsame Dosierung von Initiator und vinylaromatischen Monomeren hergestellt werden, wobei das Verhältnis der Initiatormenge I₁ der ersten Dosierung zur Initiatormenge I₂ der zweiten Dosierung im Bereich von 0,6 bis 2 liegt. Nach jeder Dosierung wird bis zum vollständigen Umsatz der Monomeren polymerisiert. Die nach diesem Verfahren erhaltenen Mischungen weisen jeweils gleiche zahlenmittleren Molmassen Mₙ für die Blöcke S₂ und S₄ und gleiche zahlenmittleren Molmassen Mₙ für die Blöcke B₁ und B₂ auf. Die aufeinanderfolgenden Dosierungen und die gebildeten Polymerspezies sind in Tabelle 1 zusammengestellt:

**Tabelle 1: Dosierfolge bei zweifacher Initiatordosierung**

| Stufe | Monomere/Initiator | Gebildete Spezies |
|---|---|---|
| 1 | Initiator (I₁) und vinylaromatisches Monomer | |
| 2 | Initiator (I₂) und vinylaromatisches Monomer | S₁-I₁ S₃-I₂ |
| 3 | Dien oder Dien und vinylaromatisches Monomer | S₁-B₁-I₁ S₃-B₂-I₂ |
| 4 | vinylaromatisches Monomer | S₁-B₁-S₂-I1 S₃-B₂-S₄-I₂ |
| 5 | Terminierunsreagenz, z.B. Isopropanol | S₁-B₁-S₂ S₃-B₂-S₄ |

Bei Verwendung einer Mischung aus Dien/vinylaromatischem Monomer in Stufe 3 kann durch Zugabe von Lewis-Basen, wie Tetrahydrofuran, oder von Kaliumsalzen, wie Kaliumtetrahydrolinaloolat, eine statistische Verteilung der vinylaromatischen Monomeren und Dienen in den Blöcken B₁ und B₂ erreicht werden.

Die erfindungsgemäßen Mischungen aus den linearen Blockcopolymeren (I) und (II) können mit thermoplastischen Polymeren in weiten Bereichen abgemischt werden. Bevorzugte Mischungen enthalten 5 bis 95 Gewichtsprozent der linearen Blockcopolymeren (I) und (II) und 95 bis 5 Gewichtsprozent Standardpolystyrol (GPPS) oder Schlagzähpolystyrol (HIPS). Solche Mischungen lassen sich durch Compoundierung während der Entgasung der Blockcopolymeren, beispielsweise durch Zugabe von Polystyrol als "Coldfeed" auf einem Entgasungsextruder herstellen. Durch die gemeinsame Aufarbeitung erhält man homogene ternäre Mischungen, die beim Verarbeiter auch direkt auf nichtmischenden Spritzgussmaschinen eingesetzt werden können. Alternativ können aber auch Granulatmischungen auf Knetern, Extrudern oder mischenden Spritzgussmaschinen direkt zu ternären Mischungen verarbeitet werden.

Die Mischungen zeichnen sich durch eine hohe Zähigkeit bei gleichzeitig hoher Steifigkeit aus. Dies zeigt sich beispielsweise in einer höheren Reissdehnung bei gleichem Elastizitätsmodul gegenüber herkömmlichen Styrol-Butadien-Blockcopolymermischungen mit Polystyrolen. Sie eigenen sich daher vor allem für den Spritzguss und lassen aufgrund des guten Zähigkeits-/Steifigkeitsverhältnisses ein materialsparendes Design zu. Die Mischungen lassen sich zu zähen Formkörpern, beispielsweise transparenten Kleiderbügeln verarbeiten, die auch bei höheren Temperaturen eine sehr gute Dimensionsstabilität aufweisen.

Ebenso bevorzugt sind Anwendungen in der Extrusion, etwa zur Herstellung von Tiefziehfolien, die dann zu Bechern, Deckeln und Lunchboxen und anderen Behältnissen thermogeformt werden können. Das hohe Zähigkeits-Steifigkeitsverhältnis lässt hier die Verwendung dünnerer Folien unter Erhalt der Festigkeit zu, was zu einer signifikanten Materialeinsparung führt.

Die erfindungsgemäße Blockcopolymermischungen lassen sich durch teilweise oder vollständige Hydrierung modifizieren. In der Regel liegt der Hydriergrad der olefinischen Doppelbindungen bei 97 % und höher, der Hydrierungsgrad der vinylaromatischen Monomeren beträgt bevorzugt mindestens 90 %, besonders bevorzugt mindestens 95 insbesondere 98 %.

Der Anteil der einpolymerisierten Dieneinheiten, der in der 1,2-Vinylform vorliegt, kann durch die Zugabe von Substanzen mit Donoreigenschaften, wie Ether oder Amine, geregelt werden.

Bevorzugt werden hierfür Tetrahydrofuran, Dimethoxyethan oder 2-Alkylfurfurylether in Mengen von 0,1 bis 1 Vol.-%, insbesondere 0,25 bis 0,5 Vol.-%, bezogen auf den als Lösungsmittel verwendeten Kohlenwasserstoff, z.B. Cyclohexan.

Anschließend an die Herstellung des Blockcopolymeren werden die ungesättigten Bindungen der Dieneinheiten und auch der vinylaromatischen Einheiten des Blockcopolymeren mit einem Hydrierkatalysator hydriert. Bevorzugt werden geträgerte Hydrierkatalysatoren eingesetzt. Als Trägermaterial eignen sich beispielsweise anorganische Substrate wie Bariumsulfat, Silikate, Kohlenstoff oder Aluminiumoxide. Geeignete Hydriermetalle sind beispielsweise Nickel, Kobalt, Rhodium, Ruthenium, Palladium, Platin oder andere Metalle der Gruppe 8.

Die Hydrierung erfolgt bevorzugt in einem gesättigten Kohlenwasserstoff als Lösungsmittel, in welchem das Blockcopolymere löslich ist. Bevorzugt werden cycloaliphatische Kohlenwasserstoffe, insbesondere Cyclohexan. Sinnvollerweise wird das gleiche Lösungsmittel wie bei der Polymerisation verwendet, so dass die Hydrierung in einem Verfahrensschritt, der sich an die Polymerisation anschließt, erfolgen kann. Die Hydrierung kann diskontinuierlich oder kontinuierlich erfolgen, bevorzugt ist eine kontinuierliche Hydrierung an einem Festbettkatalysator.

Die Hydrierung erfolgt im allgemeinen bei Temperaturen im Bereich von 40°C bis 250°C, besonders bevorzugt im Bereich von 120°C bis 180°C. Die Hydrierung kann bei Normaldruck bis 350 bar bevorzugt im Bereich von 100 bis 250 bar durchgeführt werden.

### Beispiele:

Der Butadiengehalt der Blockcopolymeren wurde mittels IR-Spektroskopie ermittelt. Die zahlenmittleren Molekulargewichte Mn und Polydispersitäten (PDI) wurden an GPC-Messungen mit Eichung relativ zu Polystyrolstandards bestimmt. Die Messung der Glasübergangstemperaturen erfolgte mittels DSC im Bereich von -100 °C - 230 °C. Im Falle der Angabe von zwei Glasübergangstemperaturen sind diese der Weich- bzw. Hartphase zuzuordnen. Bei Angabe nur einer Glasübergangstemperatur entspricht diese der Hartphase.

Die angegebenen Hydriergrade beziehen sich auf den Anteil der Hydrierung aromatischer Doppelbindungen; bestimmt über GPC durch Vergleich der UV Intensität vor und nach der Hydrierung.

E-Modul, Zugfestigkeit und Reissdehnung wurden nach ISO 527, Kerbschlagzähigkeit Charpy nach bestimmt.

ISO 179-1/1eA(F) ermittelt. Die Erweichungstemperatur Vicat B wurde ermittelt nach ISO 306 (1994)

Die Transmissionsmessungen erfolgten im Bereich von 400 - 700 nm an verpressten Platten der Schichtdicke 1 mm.

Beispiele 1-6

Die Blockcopolymermischungen wurden nach den Angaben in Tabelle 2 durch sequentielle anionische Polymerisation mit zweifacher gemeinsamer Dosierung von Styrol und Initator (sec.-Butyllithium BuLi) in Stufe 1 oder 2 bei einem Feststoffgehalt von ca. 30 Gew.-% in Cyclohexan bei Temperaturen im Bereich von 50 - 80°C hergestellt. Nach Beendigung der Polymerisation wurde mit Isopropanol abgebrochen und mit CO₂/Wasser angesäuert. In Beispiel 6 wurde die Stufe 3 in Gegenwart von Kalium-tertiär-Amylat (KTA) durchgeführt, um einen statistischen S/B-Copolymerblock zu erhalten.

**Tabelle 2:**

| Stufe | | Bsp. 1 | Bsp.2 | Bsp.3 | Bsp.4 | Bsp.5 | Bsp.6 |
|---|---|---|---|---|---|---|---|
| 1 | BuLi1 [mol] | 1,226 | 1,381 | 1,381 | 1,381 | 1,381 | 1,381 |
| | Styrol [kg] | 61,23 | 68,98 | 72,01 | 75,06 | 65,95 | 68,98 |
| 2 | BuLi2 [mol] | 1,631 | 1,381 | 1,381 | 1,381 | 1,381 | 1,381 |
| | Styrol [kg] | 34,66 | 33,51 | 34,98 | 36,47 | 32,04 | 33,51 |
| 3 | Butadien [kg] | 69,45 | 63,99 | 58,03 | 52,00 | 69,97 | 43,27 |
| | Styrol [kg] | 0 | 0 | 0 | 0 | 0 | 20,72 |
| 4 | Styrol [kg] | 34,66 | 33,51 | 34,98 | 36,47 | 32,04 | 33,51 |

| Eigenschaften | | | | | | | |
|---|---|---|---|---|---|---|---|
| | Butadien [Gew-%] | 34,7 | 32 | 29 | 26 | 35 | 21,6 |
| | Struktur (I)/(II) | 0,75 | 1 | 1 | 1 | 1 | 1 |
| | Mn(S₁) | 62073 | 62073 | 64794 | 67544 | 59346 | 62073 |
| | Mn(S₂) | 12131 | 12131 | 12663 | 13200 | 11598 | 12131 |
| | Mn(B₁=B₂) | 24312 | 23165 | 21007 | 18825 | 25328 | 23165 |
| | Mn(S₃=S₄) | 12131 | 12131 | 12663 | 13200 | 11598 | 12131 |

### Beispiele 7 -12

Die Blockcopolymermischungen der Beispiele 1-6 wurden jeweils mit 10, 17,1, 24,4, 31,3 und 38,5 Gewichtsprozent eines Standardpolystyrols mit einer Schmelzevolumenrate MVR 200/5 von 3 (Typ 158 K der BASF AG), bezogen auf die Gesamtmischung, auf einem Entgasungsextruder gemischt. Die Ergebnisse sind in Tabelle 3 zusammengefasst.

**Tabelle 3**

| Bsp. | Misch, aus Bsp. | Polystyrol [Gew.-%] | Vicat B [°C] | Shore D | E-Modul [N/mm²] | Spannung bei FR [N/mm²] | Dehnung bei FR [%] | Transm. % | Yellowness index |
|---|---|---|---|---|---|---|---|---|---|
| 7a | 1 | 10,0 | 53,5 | 66,9 | 1646 | 14,5 | 92,8 | 86,4 | 6,5 |
| 7b | 1 | 17,1 | 61,3 | 69,2 | 1745 | 15,2 | 54,8 | 79,9 | 14,7 |
| 7c | 1 | 24,4 | 66,6 | 71,6 | 1832 | 16,8 | 27,2 | 68,9 | 25,6 |
| 7d | 1 | 31,3 | 68,2 | 73,7 | 1920 | 21,2 | 19,1 | 62,9 | 30,0 |
| 7e | 1 | 38,5 | 72,8 | 74,9 | 2044 | 25,1 | 14,2 | 57,3 | 33,7 |
| 8a | 2 | 10,0 | 58,8 | 68,5 | 1763 | 13,9 | 39,4 | 85,7 | 6,3 |
| 8b | 2 | 17,1 | 64,2 | 71,4 | 1849 | 16,0 | 22,5 | 82,1 | 11,3 |
| 8c | 2 | 24,4 | 68,0 | 73,4 | 1918 | 21,1 | 19,5 | 76,8 | 16,9 |
| 8d | 2 | 31,3 | 71,4 | 75,3 | 2025 | 23,8 | 17,3 | 67,1 | 26,9 |
| 8e | 2 | 38,5 | 75,0 | 76,7 | 2134 | 25,9 | 13,9 | 63,2 | 29,8 |
| 9a | 3 | 10,0 | 66,1 | 72,7 | 1829 | 19,7 | 28,0 | 81,6 | 10,4 |
| 9b | 3 | 17,1 | 69,9 | 74,3 | 1917 | 21,2 | 25,0 | 81,4 | 11,4 |
| 9c | 3 | 24,4 | 73,7 | 75,8 | 2008 | 23,0 | 21,0 | 79,3 | 14,2 |
| 9d | 3 | 31,3 | 76,7 | 77,7 | 2112 | 25,0 | 16,4 | 75,2 | 19,2 |
| 9e | 3 | 38,5 | 79,2 | 78,8 | 2209 | 27,3 | 12,6 | 72,1 | 22,7 |
| 10a | 4 | 10,0 | 68,7 | 75,1 | 1881 | 21,3 | 23,9 | 86,7 | 5,0 |
| 10b | 4 | 17,1 | 73,0 | 76,3 | 1983 | 23,0 | 21,1 | 86,3 | 5,7 |
| 10c | 4 | 24,4 | 75,8 | 77,7 | 2072 | 25,0 | 16,5 | 84,6 | 8,2 |
| 10d | 4 | 31,3 | 78,5 | 79,2 | 2194 | 26,9 | 15,0 | 81,9 | 11,9 |
| 10f | 4 | 38,5 | 81,4 | 79,9 | 2298 | 28,9 | 11,9 | 79,4 | 15,1 |
| 11a | 5 | 10,0 | 56,3 | 64,7 | 1714 | 13,8 | 83,3 | 85,2 | 6,9 |
| 11b | 5 | 17,1 | 57,7 | 67,7 | 1813 | 14,4 | 32,1 | 79,2 | 15,0 |
| 11c | 5 | 24,4 | 62,8 | 70,8 | 1899 | 14,6 | 23,3 | 70,4 | 24,3 |
| 11d | 5 | 31,3 | 65,8 | 72,9 | 1987 | 20,2 | 20,2 | 64,4 | 28,9 |
| 11e | 5 | 38,5 | 72,6 | 74,9 | 2119 | 24,5 | 17,7 | 57,3 | 33,4 |
| 12a | 6 | 10,0 | 64,3 | 75,2 | 1732 | 22,0 | 25,5 | 86,2 | 5,8 |
| 12b | 6 | 17,1 | 67,5 | 77,0 | 1798 | 24,4 | 16,2 | 84,9 | 7,8 |
| 12c | 6 | 24,4 | 70,7 | 78,6 | 1897 | 25,7 | 13,6 | 81,7 | 11,5 |
| 12d | 6 | 31,3 | 73,7 | 79,6 | 2024 | 28,1 | 11,0 | 78,9 | 14,5 |
| 12e | 6 | 38,5 | 77,7 | 80,5 | 2178 | 29,3 | 9,9 | 75,6 | 18,1 |

### Beispiele 13 bis 15

Unter inerten Bedingungen wurden in einem10 L Rührkessel 4790 mL trockenes Cyclohexan auf 50 °C erwärmt und sekundär-Butyllithium (s.-BuLi 1) in Form einer 1,5 molaren n-Hexanlösung sowie 0,4 Vol.-% Tetrahydrofuran, bezogen auf das vorgelegte Cyclohexan, zugegeben und 5 Minuten gerührt.

Nach einer ersten Styrol-Zugabe wurde 15 Minuten polymerisiert. Zum Start neuer Polymerketten wurde eine zweite Initiatorzugabe (s.-BuLi 2) hinzugefügt und für den weiteren Blockaufbau portionsweise weiteres Styrol zugegeben. Die Reaktionszeit zum Aufbau eines Styrolblocks betrug 15, die eines Butadienblocks 40 Minuten. Die Polymerisation wurde durch Zugabe von 3 mL Isopropanol beendet. Die Stabilisierung erfolgt durch Zugabe von 0,1 Gew.-%, bezogen auf den Feststoffgehalt des Blockcopolymeren, Kerobit TBK (2,6-Di-tert.-butyl-p-kresol). Die in den einzelnen Stufen eingesetzten Mengen Styrol, Butadien und sekundär-Butyllithium sowie die Eigenschaften der erhaltenen Blockcopolymermischungen sind in Tabelle 4 zusammengefasst.

**Tabelle 4:**

| | | Beisp. 13 | Beisp. 14 | Beisp. 15 |
|---|---|---|---|---|
| Stufe 1 | Styrol [g] | 485 | 716 | 716 |
| | s.-BuLi 1 [mL] | 7,97 | 7,97 | 7,97 |
| Stufe 2 | Styrol [g] | 264 | 272 | 272 |
| | s.-BuLi 2 [mL] | 7,97 | 7,97 | 7,97 |
| Stufe 3 | Butadien [g] | 411 | 411 | 351 |
| Stufe 4 | Styrol [g] | 208 | 264 | 264 |
| | Butadiengehalt [%] | 30 | 27 | 25 |
| | Anteil 1,2-Verknüpfungen im Polybutadien [%] | 44 | 41 | 41 |
| | Mn [g/mol] | 75600 | 85700 | 80800 |
| | PDI | 1,18 | 1,25 | 1,24 |
| | Tg [°C] | -65 / 98 | -68 / 99 | -67 / 99 |

### Beispiele 16 bis 18

Die Blockcopolymermischungen der Beispiele 13 bis 15 wurden als 5 Gew.-%ige Lösungen in Cyclohexan mittels eines Pt/C - Hydrierkatalysators (5% Pt auf Aktivkohle) und einem Polymer/Katalysator-Massenverhältnis von 10:3 bei 200 °C und 250 bar Wasserstoff über 24 Stunden hydriert. Aus dem Vergleich der GPC-Kurven (RI-Signal) vor und nach der Hydrierung wurde kein Molekulargewichtsabbau festgestellt. Die Eigenschaften der hydrierten Blockcopolymermischungen sind in Tabelle 5 zusammengestellt.

**Tabelle 5:**

| | Beisp. 16 | Beisp. 17 | Beisp. 18 |
|---|---|---|---|
| Hydriergrad [%] | 99,6 | 100 | 100 |
| E-Modul [GPa] | 1,41 | 1,6 | 1,56 |
| Zugfestigkeit [MPa] | 35,6 | 43,4 | 42,7 |
| Reissdehnung [%] | 85 | 70 | 62 |
| Tg [°C] | -55/127 | -54/133 | -55/130 |
| Vicat B [°C] | 113 | 113 | 115 |
| Charpy, gekerbt 23°C | 2,52 | 3,22 | 2,58 |
| Transmission [%] | > 92 | > 91 | > 91 |

### Beispiele 19 bis 21

Jeweils insgesamt 20 g der kernhydrierten Blockcopolymermischungen der Beispiele 16 bis 18 und kernhydriertes Polystyrol (PCHE durch Hydrierung von PS 158 K der BASF Aktiengesellschaft) wurden in 200 mL Cyclohexan aufgelöst und bei Raumtemperatur gerührt. Das Lösungsmittel wird anschließend im Vakuum bei 80 °C vollständig entfernt. Die Gewichtsanteile an PCHE und die Eigenschaften der Blends sind in Tabelle 6 zusammengestellt. E-Modul, Zugfestigkeit und Reissdehnung wurden an Zugstäben entsprechend ISO 3167 (in allen Dimensionen 1/8 der Ausmaße des Originalstabs) in Anlehnung an ISO 527 ermittelt.

**Tabelle 6:**

| Beispiel | 19a | 19b | 19c | 20a | 20b | 20c | 21a | 21b | 21c |
|---|---|---|---|---|---|---|---|---|---|
| Blockcopoly mermischung aus Beispiel | 16 | 16 | 16 | 17 | 17 | 17 | 18 | 18 | 18 |
| Gewichtsanteil PCHE [%] | 10 | 17 | 50 | 10 | 17 | 50 | 10 | 17 | 50 |
| E-Modul [GPa] | 1,42 | 1,52 | 2,07 | 1,49 | 1,72 | 2,22 | 1,77 | 1,96 | 2,33 |
| Zugfestigkeit [MPa] | 40,4 | 43,8 | 61,4 | 43,2 | 53 | 66,7 | 53 | 56 | 68,8 |
| Reissdehnung [%] | 117 | 97 | 8 | 69 | 69 | 6 | 71 | 67 | 6 |
| Tg [°C] | 139 | 140 | 143 | | 140 | 145 | 140 | 140 | 143 |
| Transmission [%] | > 88 | > 86 | > 82 | | > 89 | > 86 | > 90 | > 88 | > 86 |

## Patentansprüche

1. Mischungen enthaltend lineare Blockcopolymere aus vinylaromatischen Monomeren und Dienen der Struktur
(I) S₁-B₁-S₂ und
(II) S₃-B₂-S₄,wobei S₁ für einen Block aus vinylaromatischen Monomeren mit einer zahlenmittleren Molmasse Mₙ im Bereich von 40.000 bis 70.000 g/mol, S₂, S₃ und S₄ jeweils für Blöcke aus vinylaromatischen Monomeren mit einer zahlenmittleren Molmasse Mₙ im Bereich von 5.000 bis 20.000 g/mol. B₁ und B₂ jeweils für Blöcke aus Dienen oder Copolymerblöcke aus Dienen und vinylaromatischen Monomeren mit einer zahlenmittleren Molmasse Mₙ im Bereich von 15.000 bis 40.000 g/mol steht, und das Verhältnis der Blockcopolymeren (I)/(II) im Bereich von 0,6 bis 2 liegt.

2. Mischungen nach Anspruch 1, **dadurch gekennzeichnet, dass** das Verhältnis der Blockcopolymeren (I)/(II) im Bereich von 0,7 bis 1,5 liegt.

3. Mischungen nach Anspruch 1 oder 2, **dadurch gekennzeichnet, dass** das Verhältnis vinylaromatisches Monomer/Dien in den Blöcken B₁ oder B₂ im Bereich von 0,3 bis 0,7 liegt.

4. Mischungen nach einem der Ansprüche 1 bis 3, **dadurch gekennzeichnet, dass** die Blöcken B₁ und B₂ jeweils für Copolymerblöcke aus Dienen und vinylaromatischen Monomeren mit statistischer Verteilung stehen.

5. Mischungen nach einem der Ansprüche 1 bis 4, **dadurch gekennzeichnet, dass** die zahlenmittleren Molmassen Mₙ von S₁ im Bereich von 45.000 bis 70.000, von S₂, S₃, und S₄ jeweils im Bereich von 8.000 bis 17.000 g/mol, und von B₁ und B₂ jeweils im Bereich von 18.000 bis 30.000 g/mol liegen.

6. Mischungen nach einem der Ansprüche 1 bis 5, **dadurch gekennzeichnet, dass** die Blöcke S₃ und S₄ die gleichen zahlenmittleren Molmassen Mₙ aufweisen.

7. Mischungen nach einem der Ansprüche 1 bis 6, **dadurch gekennzeichnet, dass** jeweils die zahlenmittleren Molmassen Mₙ von S₂ und S₄ und die zahlenmittleren Molmassen von B₁ und B₂ den gleichen Wert aufweisen.

8. Mischungen nach einem der Ansprüche 1 bis 7, **dadurch gekennzeichnet, dass** sie 5 bis 95 Gewichtsprozent der linearen Blockcopolymeren (I) und (II) und 95 bis 5 Gewichtsprozent Standardpolystyrol oder Schlagzähpolystyrol enthalten.

9. Mischungen, erhältlich durch teilweise oder vollständige Hydrierung der Mischungen nach einem der Ansprüchen 1 bis 8.

10. Mischungen nach Anspruch 9, **dadurch gekennzeichnet, dass** der Hydriergrad der olefinischen Doppelbindungen 97 % und höher und der vinylaromatischen Monomereinheiten mindestens 90 % beträgt.

11. Mischungen nach Anspruch 9 oder 10, **dadurch gekennzeichnet**, die einpolymerisierten Dieneinheiten vor der Hydrierung zu mehr als 30 %, bezogen auf die Summe der Dieneinheiten, in der 1,2-Vinylform vorliegen.

12. Verfahren zur Herstellung von Mischungen nach einem der Ansprüche 1 bis 8, **dadurch gekennzeichnet, dass** die Blockcopolymeren (I) und (II) jeweils durch sequentielle anionische Polymerisation von vinylaromatischen Monomeren und Dienen mit alkalimetallorganischen Initiatoren nacheinander oder in verschiedenen Reaktoren hergestellt und anschließend im Verhältnis (I)/(II) im Bereich von 0,6 bis 2 abgemischt werden.

13. Verfahren zur Herstellung von Mischungen nach Anspruch 7, **dadurch gekennzeichnet, dass** die Blockcopolymeren (I) und (II) durch sequentielle anionische Polymerisation von vinylaromatischen Monomeren und Dienen mit alkalimetallorganischen Initiatoren gleichzeitig in einem Reaktoren durch zweifache, gemeinsame Dosierung von Initiator und vinylaromatischen Monomeren hergestellt werden, wobei das Verhältnis der Initiatormenge I₁ der ersten Dosierung zur Initiatormenge I₂ der zweiten Dosierung im Bereich von 0.6 bis 2 liegt.

14. Verfahren zur Herstellung von Mischungen von kernhydrierten Blockcopolymeren umfassend die Schritte:
a) sequentielle anionische Polymerisation der vinylaromatischen Monomeren und Dienen nach Anspruch 12 oder 13
b) Terminierung der Polymerisation mit einem protischen Terminierungsmittel oder einem Kopplungsmittel,
c) Hydrierung des erhaltenen Blockcopolymeren mit einem Hydrierkatalysator.

15. Verfahren nach Anspruch 14, **dadurch gekennzeichnet, daß** der Schritt a) in einem cycloaliphatischen Kohlenwasserstoff als Lösungsmittel und in Gegenwart von 0,3 bis 0,5 Volumenprozent, bezogen auf das Lösungsmittel, eines Ethers durchgeführt wird.

16. Verwendung der Blockcopolymeren gemäß den Ansprüchen 9 bis 11 für optische Medien.

## Claims

1. A mixture comprising linear block copolymers made from vinylaromatic monomers and from dienes of the structure
(I) S₁-B₁-S₂ and
(II) S₃-B₂-S₄, where S₁ is a block made from vinylaromatic monomers with number-average molar mass Mₙ in the range from 40,000 to 70,000 g/mol, each of S₂, S₃ and S₄ is a block made from vinylaromatic monomers with number-average molar mass Mₙ in the range from 5,000 to 20,000 g/mol, each of B₁ and B₂ is a block made from dienes or a copolymer block made from dienes and from vinylaromatic monomers with number-average molar mass Mₙ in the range from 15,000 to 40,000 g/mol, and the ratio of the block copolymers (I)/(II) is in the range from 0.6 to 2.

2. The mixture according to claim 1, wherein the ratio of the block copolymers (I)/(II) is in the range from 0.7 to 1.5.

3. The mixture according to claim 1 or 2, wherein the ratio of vinylaromatic monomer to diene in the blocks B₁ or B₂ is in the range from 0.3 to 0.7.

4. The mixture according to any of claims 1 to 3, wherein each of the blocks B₁ and B₂ is a copolymer block made from dienes and from vinylaromatic monomers with random distribution.

5. The mixture according to any of claims 1 to 4, wherein the number-average molar mass Mₙ of S₁ is in the range from 45,000 to 70,000 g/mol, that of each of S₂, S₃, and S₄ is in the range from 8,000 to 17,000 g/mol, and that of each of B₁ and B₂ is in the range from 18,000 to 30,000 g/mol.

6. The mixture according to any of claims 1 to 5, wherein the blocks S₃ and S₄ have the same number-average molar masses Mₙ.

7. The mixture according to any of claims 1 to 6, wherein the number-average molar masses Mₙ of S₂ and S₄ are identical, and the number-average molar masses of B₁ and B₂ are identical.

8. The mixture according to any of claims 1 to 7, which comprises from 5 to 95 percent by weight of the linear block copolymers (I) and (II) and from 95 to 5 percent by weight of standard polystyrene or impact-modified polystyrene.

9. A mixture, obtainable by partial or complete hydrogenation of the mixture according to any of claims 1 to 8.

10. The mixture according to claim 9, wherein the degree of hydrogenation of the olefinic double bonds is 97% or higher, and that of the vinylaromatic monomer units is at least 90%.

11. The mixture according to claim 9 or 10, wherein, prior to the hydrogenation, and based on the entirety of the diene units, more than 30% of the copolymerized diene units are present in the 1,2-vinyl form,

12. A process for preparing mixtures according to any of claims 1 to 8, which comprises preparing each of the block copolymers (I) and (II) by sequential anionic polymerization of vinylaromatic monomers and of dienes with organo-alkali metal initiators in succession or in different reactors, and then blending these with a ratio (I)/(II) in the range from 0.6 to 2.

13. A process for preparing mixtures according to claim 7, which comprises preparing the block copolymers (I) and (II) by sequential anionic polymerization of vinylaromatic monomers and of dienes using organo-alkali metal initiators simultaneously in one reactor using two joint feeds of initiator and vinylaromatic monomer, where the ratio of the amount of initiator I₁ in the first feed to the amount of initiator I₂ in the second feed is in the range from 0.6 to 2.

14. A process for preparing mixtures of ring-hydrogenated block copolymers encompassing the steps of:
a) sequential anionic polymerization of the vinylaromatic monomers and dienes according to claim 12 or 13,
b) termination of the polymerization, using a protic terminator or a coupling agent,
c) hydrogenation of the resultant block copolymer using a hydrogenation catalyst.

15. The process according to claim 14, wherein step a) is carried out in a cycloaliphatic hydrocarbon as solvent, and in the presence of from 0.3 to 0.5% by volume, based on the solvent, of an ether.

16. The use of the block copolymers according to any of claims 9 to 11 for optical media.

## Revendications

1. Mélanges contenant des copolymères séquencés linéaires à base de monomères vinylaromatiques et de diènes de structure
(I) S₁-B₁-S₂ et
(II) S₃-B₂-S₄, S₁ représentant une séquence de monomères vinylaromatiques ayant une masse moléculaire moyenne en nombre Mₙ dans la plage de 40 000 à 70 000 g/mole, S₂, S₃ et S₄ représentant chacun des séquences de monomères vinylaromatiques ayant une masse moléculaire moyenne en nombre Mₙ dans la plage de 5 000 à 20 000 g/mole, B₁ et B₂ représentant chacun des séquences de diènes ou des séquences de copolymères à base de diènes et de monomères vinylaromatiques ayant une masse moléculaire moyenne en nombre Mₙ dans la plage de 15 000 à 40 000 g/mole, et le rapport des copolymères séquences (I)/(II) étant dans la plage de 0,6 à 2.

2. Mélanges selon la revendication 1, **caractérisés en ce que** le rapport des copolymères séquencés (I)/(II) se situe dans la plage allant de 0,7 à 1,5.

3. Mélanges selon la revendication 1 ou 2,
**caractérisés en ce que** le rapport monomère vinylaromatique/diène dans les séquences B₁ ou B₂ se situe dans la plage allant de 0,3 à 0,7.

4. Mélanges selon l'une quelconque des revendications 1 à 3, **caractérisés en ce que** les séquences B₁ et B₂ représentent chacune des séquences de copolymères à base de diènes et de monomères vinylaromatiques à distribution statistique.

5. Mélanges selon l'une quelconque des revendications 1 à 4, **caractérisés en ce que** les masses moléculaires moyennes en nombre Mₙ de S₁ se situent dans la plage allant de 45 000 à 70 000, de S₂, S₃ et S₄ se situent chacune dans la plage allant de 8 000 à 17 000 g/mole, et de B₁ et B₂ se situent chacune dans la plage allant de 18 000 à 30 000 g/mole.

6. Mélanges selon l'une quelconque des revendications 1 à 5, **caractérisés en ce que** les séquences S₃. et S₄ ont les mêmes masses moléculaires moyennes en nombre Mₙ.

7. Mélanges selon l'une quelconque des revendications 1 à 6, **caractérisés en ce que** les masses moléculaires moyennes en nombre Mₙ de S₂ et S₄ et les masses moléculaires moyennes en nombre de B1 et B₂ ont la même valeur.

8. Mélanges selon l'une quelconque des revendications 1 à 7, **caractérisés en ce qu'**ils contiennent 5 à 95 % en poids des copolymères séquences linéaires (I) et (II) et 95 à 5 % en poids de polystyrène standard ou de polystyrène choc.

9. Mélanges, pouvant être obtenus par hydrogénation partielle ou totale des mélanges selon l'une quelconque des revendications 1 à 8.

10. Mélanges selon la revendication 9, **caractérisés en ce que** le degré d'hydrogénation des doubles liaisons oléfiniques est de 97 % ou plus et celui des motifs monomères vinylaromatiques est d'au moins 90 %.

11. Mélanges selon la revendication 9 ou 10,
**caractérisés en ce qu'**avant l'hydrogénation les motifs diène incorporés par polymérisation, sont présents à raison de plus de 30%, par rapport à la somme des motifs diène, sous la forme 1,2-vinyle.

12. Procédé pour la préparation des mélanges selon l'une quelconque des revendications 1 à 8, **caractérisé en ce qu'**on prépare les copolymères séquencés (I) et (II) chacun par polymérisation anionique séquentielle de monomères vinylaromatiques et de diènes avec des amorceurs organiques contenant des métaux alcalins, successivement ou dans différents réacteurs, et ensuite on les mélange en un rapport (I)/(II) dans la plage de 0,6 à 2.

13. Procédé pour la préparation des mélanges selon la revendication 7, **caractérisé en ce qu'**on prépare les copolymères séquences (I) et (II) par polymérisation anionique séquentielle de monomères vinylaromatiques et de diènes avec des amorceurs organiques contenant des métaux alcalins, simultanément dans un réacteur par double addition dosée conjointe d'amorceur et de monomères vinylaromatiques, le rapport de la quantité d'amorceur I₁ de la première addition dosée à la quantité d'amorceur I₂ de la deuxième addition dosée se situant dans la plage allant de 0,6 à 2.

14. Procédé pour la préparation de mélanges de copolymères séquences hydrogénés sur le noyau, comprenant les étapes suivantes
a) polymérisation anionique séquentielle des monomères vinylaromatiques et des diènes selon la revendication 12 ou 13,
b) terminaison de la polymérisation à l'aide d'un terminateur protique ou d'un agent de couplage,
c) hydrogénation des copolymères séquencés obtenus, à l'aide d'un catalyseur d'hydrogénation.

15. Procédé selon la revendication 14, **caractérisé en ce que** l'étape a) est effectuée dans un hydrocarbure cycloaliphatique en tant que solvant et en présence de 0,3 à 0,5 % en volume, par rapport au solvant, d'un éther.

16. Utilisation des copolymères séquences selon les revendications 9 à 11, pour des milieux optiques.
